# EUROPÄISCHE PATENTSCHRIFT

(11) **EP 3 944 918 B1**
(45) Veröffentlichungstag und Bekanntmachung des Hinweises auf die Patenterteilung: **17.09.2025**
(21) Anmeldenummer: 21186563.9
(22) Anmeldetag: 20.07.2021
(51) Int. Cl.: B23B 51/10

(54) **FASENFRÄSER**
MILLING CUTTER
FRAISE À CHANFREINER

(30) Priorität: 31.07.2020 DE 102020120298
(43) Veröffentlichungstag der Anmeldung: 02.02.2022
(73) Patentinhaber: Vratny, Andreas, 85617 Aßling (DE)
(72) Erfinder: Vratny, Andreas, 85617 Aßling (DE)
(74) Vertreter: Beckord & Niedlich Patentanwälte PartG mbB

(56) Entgegenhaltungen:
- EP-A1- 1 275 458
- EP-A1- 2 774 704
- WO-A1-2018/153896
- US-A1- 2010 037 734

## Beschreibung

Die Erfindung betrifft eine Vorrichtung zum Anfasen, Entgraten und Senken, also zum Herstellen von Fasen und Senkungen, beispielsweise einen Fasenfräser, Entgrater oder Kegelsenker.

Die DE 10 2017 214 622 A1 beschreibt einen Kegelsenker mit mindestens einer bogenförmig gekrümmt verlaufenden Hauptschneide. Die Krümmung der Schneide wird durch zwei Punkte im Schneidenverlauf und durch ihren Radius definiert. Der erste Punkt des Bogens liegt auf einem mittigen Schneideneck, der zweite Punkt auf einem außenumfangseitigen Schneideeck. Das Werkzeug hat keine Spitze.

Aufgabe der Erfindung ist es, eine verbesserte Vorrichtung gemäß Oberbegriff mit einer Schneidkopfspitze vorzuschlagen.

Diese Aufgabe wird gelöst durch eine Vorrichtung mit den Merkmalen nach Anspruch 1.

Die Vorrichtung zum Anfasen, Entgraten und Senken ist ein Fasenfräser. Der erfindungsgemäße Fasenfräser besteht aus einem herkömmlichen Schaft, dessen Rotationskörper einen Zylinder darstellt, und aus einem Schneidkopf, dessen Rotationskörper einen geraden Kreiskegel darstellt. Der maximale Durchmesser des Schneidkopfs kann dem Durchmesser des Schafts entsprechen oder größer sein. Im zweiten Fall ergibt sich ein über den Schaft radial überstehender Schneidkopf.

Der Rotationskörper des Schneidkopfs ist dasjenige Volumen, das der um seine Rotationsachse rotierende Schneidkopf ausfüllt. Das Volumen stellt einen geraden Kreiskegel dar, auch wenn der Schneidkopf selbst aufgrund der eingeschliffenen Schneiden keine klassische geometrische Grundfigur darstellt.

In einer Seitenansicht zeigt sich der Kegel als gleichschenkliges Dreieck mit der Rotationsachse als Höhe. Der Radius des Kegels an seiner Grundfläche stellt die Grundlinie des gleichschenkligen Dreiecks dar, eine Radiale, also jeder, auch kürzere Radius des Kegels in Richtung auf seine Spitze hin stellt in der Seitenansicht ein Lot auf die Rotationsachse in beliebiger Höhe dar. Die Kegelspitze fällt mit der Schneidkopfspitze des Fasenfräsers zusammen. Sie bietet einen Spitzenwinkel des Schneidkopfes entsprechend einem Öffnungswinkel des Kreiskegels.

In einer Draufsicht zeigt sich der Kegel als Kreis mit der Rotationsachse als Kreismittelpunkt, die Radiale als eine beliebige Gerade, die vom Kreismittelpunkt ausgehend in Richtung auf den Kreisumfang verläuft.

Der Schneidkopf trägt eine Anzahl an bogenförmig gekrümmten Schneiden. Sowohl in der Seitenansicht als auch in der Draufsicht zeigt sich eine Schneide des Fräskopfs in der Regel als gekrümmter Bogen. Die Krümmung eines konstant gekrümmten Bogens kann durch einen Radius definiert sein. Alternativ kann ein Winkel zwischen den Tangenten an zwei Punkten der Schneide die Krümmung des durch die Punkte begrenzten Schneidensegments der Schneide umschreiben. Bei einem konstanten Kreisbogen bleibt auch die Krümmung konstant. Der Wert der Krümmung beträgt Null für eine Gerade, jene ist also als Sonderfall eines bogenförmigen Verlaufs einer Schneide zu sehen. Zeichnerisch lässt sich die Krümmung in der Draufsicht, in der Seitenansicht oder im dreidimensionalen Raum darstellen.

Der Fasenfräser umfasst am Schneidkopf eine Anzahl an Schneiden, mindestens aber zwei Schneiden und davon mindestens eine erfindungsgemäße Schneide. Die erfindungsgemäße Schneide verläuft in der Draufsicht betrachtet von der Schneidkopfspitze aus zu einem Außenrand des Schneidkopfs hin. Erfindungsgemäß weist nun der Verlauf der Schneide mindestens eine Krümmungsänderung auf.

Durch die Einführung einer Krümmungsänderung entlang der Schneide ist es möglich, zumindest im Bereich der Schneidkopfspitze eine andere Krümmung als im übrigen Schneidenverlauf zu realisieren. Dadurch wird eine Bearbeitung der Schneiden bis in die Schneidkopfspitze hinein erst möglich.

Im Stand der Technik ist dies aus Platzgründen oft nicht der Fall, eine Bearbeitung der Schneiden bis in die Spitze nicht möglich. Denn das Schleifen einer konstant gekrümmten Schneide mit einer nennenswerten Krümmung (jenseits der schwachen Krümmung z.B. gemäß der DE 20 2005 019 514) bis in die Spitze hinein beschädigt oder zerstört zwangsläufig die zuvor hergestellte Schneide. Der Grund dafür ist das geringe Platzangebot für das im Verhältnis zur Schneidkopfspitze große Schleifwerkzeug.

Die Krümmung der Schneide eines erfindungsgemäßen Fasenfräsers dagegen kann sich an jedem geeigneten Punkt im Verlauf der Schneide ändern. So ist es möglich, eine auf den jeweiligen Schneidenabschnitt optimal angepasste Krümmung zu realisieren. So ermöglicht etwa eine schwach gekrümmte Schneide, die aber bis in die Spitze ausgearbeitet ist, die Bearbeitung sehr kleiner Bauteilradien. Eine stärkere Krümmung verbessert dagegen die Laufruhe und das Schnittbild. Diese Anwendungsfälle zeigen, dass eine sich im Schneidenverlauf ändernde Krümmung die jeweilige Aufgabe erst ermöglicht.

Der Vorteil des erfindungsgemäßen Fasenfräsers besteht darin, eine mit Schneiden versehene Spitze zu bieten. Dadurch ist der Nutzer in der Lage, auch Werkstücke sehr fein zu bearbeiten, beispielsweise Fasen bis in Ecken hinein herzustellen. Er kann sehr kleine Radien realisieren und Fasen mit einer sehr geringen Bearbeitungstiefe erzeugen. Gleichzeitig kann die Krümmung der Schneide im Verlauf von der Spitze weg den jeweiligen Schnittansprüchen optimal angepasst werden. Somit wendet sich die Erfindung von der bisherigen Praxis ab, Fasenfräser mit geraden oder konstant schwach gekrümmten Scheiden zur Erzeugung einer schneidfähigen Spitze vorzusehen oder Fasenfräser mit konstant stark gekrümmten Schneiden zur Verbesserung der Laufruhe zu generieren, die aber keine Schneidspitze bieten können.

In einer bevorzugten Ausführung besteht der Fasenfräser aus mindestens einem Schneidenabschnitt im Bereich der Schneidkopfspitze und mindestens einem weiterer Schneidenabschnitt im Bereich des Außenrandes des Schneidkopfes. Die beiden Abschnitte weisen erfindungsgemäß eine voneinander verschiedene Krümmung auf. Dadurch wird die Herstellung der Schneide im Bereich der Schneidkopfspitze ermöglicht. Dieselbe Schneide kann im Bereich des Außenrandes des Schneidkopfes und damit an ihrem Auslauf optimiert werden, z.B. hinsichtlich der Laufruhe des Werkzeugs oder einer leichteren Spanabführung. Sie kann dazu erfindungsgemäß eine Krümmung aufweisen, die von derjenigen des ersten Abschnitts abweicht. Damit muss kein Kompromiss zwischen den Krümmungen der beiden Abschnitte gefunden werden.

In einer einfachen Ausführung der Erfindung besteht die mindestens eine erfindungsgemäße Schneide aus genau zwei Schneidenabschnitten, die eine jeweils voneinander verschiedene Krümmung aufweisen. Sie ermöglicht eine geringe Bearbeitungskomplexität für das Herstellen der Schneidenkrümmung in ihrem Verlauf.

Eine bevorzugte Ausführungsform der Erfindung bietet eine von der Schneidkopfspitze aus radial nach außen zunehmende Krümmung mindestens eines Schneidenabschnittes. Die geringere oder geringste Schneidenkrümmung besteht damit an der Spitze des Schneidkopfs. Zum Außenrand des Schneidkopfs hin nimmt die Krümmung zu, so dass sich am Außenrand selbst die stärkste Krümmung im Verlauf der Schneide befindet. Das ermöglicht die Bearbeitung der Schneiden bis in die Schneidkopfspitze hinein, erhöht zugleich aber über die nach außen zunehmende Krümmung eines Schneidenabschnittes die Laufruhe des Fasenfräsers.

Die zunehmende Krümmung eines Schneidenabschnittes lässt sich vorteilhaft mit einer Potentialfunktion beschreiben. So lange der Verlauf des Schneidenabschnittes der Potenzialfunktion folgt, ändert sich seine Krümmung nicht sprunghaft.

In einer weiteren Ausgestaltung der Erfindung kann - in einer Seitenansicht des Fasenfräsers betrachtet - eine Tangente an der Schneide in einem spitzennahen Abschnitt kurz vor und/oder in der Schneidspitze mit der Rotationsachse einen Winkel von 0° bis 20°, vorteilhaft von 0° bis 15° und besonders vorteilhaft von 0° bis 10° einschließen. Damit ist ein in der Seitenansicht betrachteter senkrechter Anlauf der Schneide beschrieben. Der geringe Winkel ermöglicht nicht nur die bereits beschriebene feine Bearbeitung von Werkstücken. Durch die nahe der Schneidspitze nicht oder nur schwach gekrümmte Schneide wirken seitwärts auf den Fasenfräser nur sehr geringe Bearbeitungskräfte, so dass eine dauerhafte Schneidspitze zu erwarten ist.

Im radialen Auslaufbereich der Schneide, also in dem Bereich, der dem Außenumfang des Schneidkopfs näher liegt, kann sich die Steigung der mindestens einen erfindungsgemäßen Schneide verringern - wiederum in einer Seitenansicht betrachtet. Nach einer weiteren vorteilhaften Ausführungsform der Erfindung kann die Tangente an die Schneide mit der Rotationsachse typischerweise einen Winkel von 10° bis 60° einschließen, bevorzugt einen Winkel von 20° bis 55° und besonders bevorzugt von 40° bis 50°. Das flache Auslaufen der Schneide verbessert die Laufruhe.

Nach einer weiteren vorteilhaften Ausgestaltung der Erfindung kann eine Teilmenge der Schneiden bis in die Schneidkopfspitze hinein verlaufen. Damit münden nicht alle Schneiden in der Schneidkopfspitze. In oder an der Schneidkopfspitze sind damit weniger Schneiden vorhanden, als am Außenrand des Schneidkopfs. Die geringere Anzahl an Schneiden an der Schneidkopfspitze kommt dem dort vorhandenen geringeren Raum bzw. dem im Verhältnis zum Außenrand erheblich kürzeren Umfang entgegen. Radial auswärts betrachtet können im weiteren Schneidenverlauf neue Schneiden hinzukommen, da grundsätzlich die Laufruhe des Werkzeugs und die Haltbarkeit der einzelnen Schneiden mit der Anzahl der Schneiden zunimmt. Auf diese Art werden die Vorteile einer ausgearbeiteten Schneidkopfspitze zur Feinbearbeitung und mehrerer Schneiden zur schnellen und präzisen Bearbeitung von Werkstücken kombiniert.

In einer vorteilhaften Ausführung kann ein erfindungsgemäßer Fasenfräser zumindest am äußeren Rand des Schneidkopfes über bis zu zehn Schneiden, vorzugsweise über zwei bis acht Schneiden verfügen, besonders bevorzugt über drei bis fünf Schneiden. Die Anzahl der Schneiden kann sich zur Spitze hin reduzieren. So kann der Schneidkopf in den Bereichen mit größerem Umfang mehr Schneiden aufnehmen, was zu einem verbesserten Schnittbild und einer erhöhten Robustheit beiträgt, während trotzdem die Bearbeitung eines Werkstücks mit sehr geringen Radien möglich bleibt.

Im Allgemeinen weisen die in Rotationsrichtung nebeneinanderliegenden Schneiden herkömmlicher Fräsköpfe eine übereinstimmende Geometrie auf. Die Schneiden desselben Schneidkopfs können sich erfindungsgemäß aber in ihrer Geometrie voneinander unterscheiden. Sie können sich hinsichtlich ihrer Winkel an der Schneidkopfspitze und/oder hinsichtlich ihrer Winkel an ihrem umfangseitigen Schneidenauslauf und/oder hinsichtlich ihrer in Richtung der Rotationsachse betrachteten Schneidenhöhe unterscheiden. Die ungleiche Gestaltung der Schneiden reduziert das Auftreten rhythmischer Belastungsspitzen und die daraus resultierenden Eigenschwingungen des Fasenfräsers erheblich. Folge ist eine deutlich verbesserte Laufruhe und als Folge daraus eine sauberere Fräskante.

Der Öffnungswinkel des erfindungsgemäßen Schneidkopfkegels an der Schneidkopfspitze kann zwischen 10° und 130° betragen. Gängig sind Winkel von 60°, 90° und 120°, die in der Regel je nach Bearbeitungsaufgabe gewählt werden.

Der Grundkörper eines erfindungsgemäßen Fasenfräsers kann aus einem einzigen Material bestehen, insbesondere aus Hartmetall oder HSS bzw. Schnellarbeitsstahl. Damit sind der Schneidkopf einerseits und der Schaftabschnitt andererseits materialgleich ausgebildet. Ein Fasenfräser aus nur einem Material lässt sich besonders kostengünstig herstellen.

In einer dazu alternativen Ausführung sind die Schneiden aus einem anderen, insbesondere aus einem härteren Material hergestellt, als der Grundkörper. Die Schneiden können dadurch wesentlich härter beansprucht werden, als dies bei einer Fertigung aus dem Grundkörpermaterial der Fall wäre. Dadurch lässt sich das Spektrum der bearbeitbaren Materialien erweitern und die Robustheit des Fasenfräsers steigern.

In einer besonders bevorzugten Ausführung bestehen die Schneiden aus Siliziumcarbid oder Wolframcarbid. Durch die Ausgestaltung der Schneiden mit einem härteren Material lässt sich deren Schnittleistung und dadurch das Schnittbild positiv beeinflussen. Der Einsatz dieses besonders harten Materials verbessert auch die Haltbarkeit der Schneiden.

Im Folgenden wird das Prinzip der Erfindung anhand von Zeichnungen beispielshalber noch näher erläutert. In der Zeichnung zeigen:
- Figur 1:: einen Kegelsenker gemäß der DE 10 2017 214 622 A1 in einer Draufsicht,
- Figur 2:: eine Ausführungsform des erfindungsgemäßen Fasenfräsers in einer Draufsicht,
- Figur 3:: den Fasenfräser der Fig. 2 in einer Seitenansicht, und
- Figur 4:: eine dreidimensionale Ansicht des Fasenfräsers der Fig. 2.

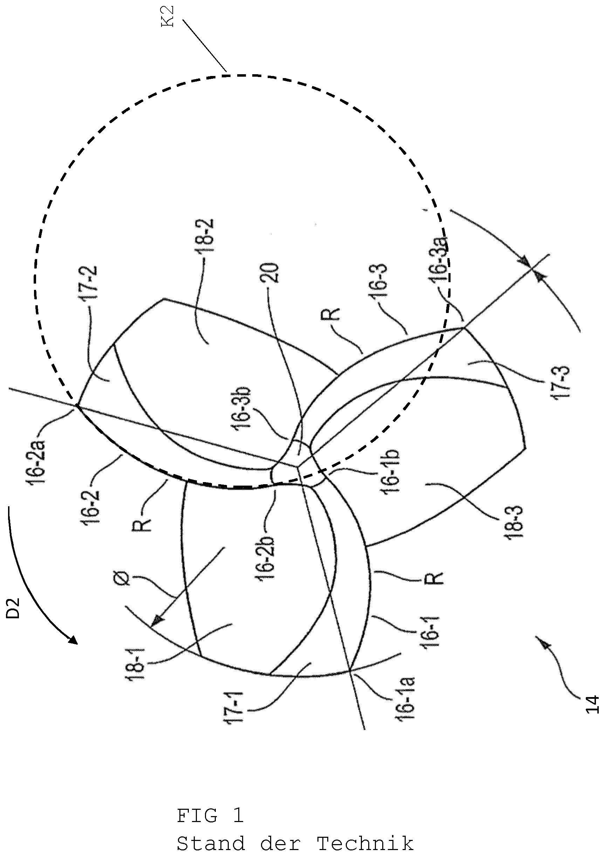

Fig. 1 zeigt die Draufsicht auf einen Schneidkopf 14 eines Kegelsenkers nach Stand der Technik. Der Kegelsenker ist dreischneidig ausgeführt. Drei am Schneidkopf 14 vorgesehenen Hauptschneiden 16-1, 16-2, 16-3 sind mit einer 120° Teilung in Drehrichtung D1 um eine Drehachse 20 herum angeordnet. Entgegen der Drehrichtung D1 gesehen schließt sich an jede Hauptschneide 16-1, 16-2, 16-3 eine Hauptfreifläche 17-1, 17-2, 17-3 an, auf die eine Spannut 18-1, 18-2, 18-3 folgt. Die drei Hauptschneiden 16-1, 16-2, 16-3 liegen ohne eine Schneidhöhendifferenz in Richtung der Drehachse 20 auf einer gemeinsamen virtuellen Mantelfläche eines Kegelstumpfs mit der Drehachse 20 als Kegelachse.

Die Hauptschneiden 16-1, 16-2, 16-3 haben eine konstante Krümmung. In Fig. 1 ist daher mit R der jeweilige Bogenradius angegeben - für jede Hauptschneide 16-1, 16-2, 16-3 derselbe. Somit lässt sich der Verlauf der Hauptschneiden 16-1, 16-2, 16-3 des Kegelsenkers mit einem Kreisausschnitt beschreiben. Ein zugehöriger Kreis K2 ist in Fig. 1 zur Veranschaulichung eingezeichnet. Die Hauptschneiden 16-1, 16-2, 16-3 des Kegelsenkers nach Stand der Technik enden aus Fertigungsgründen an einem ebenflächigen mittigen Schneideneck 16-1b, 16-2b, 16-3b und bilden damit einen Kegelstumpf. Denn bei der Herstellung einer der Hauptschneiden 16-1, 16-2, 16-3 bis in die Spitze hinein würde eine vorher hergestellte Hauptschneide 16-1, 16-2, 16-3 aufgrund der beengten Platzverhältnisse an der Spitze beschädigt.

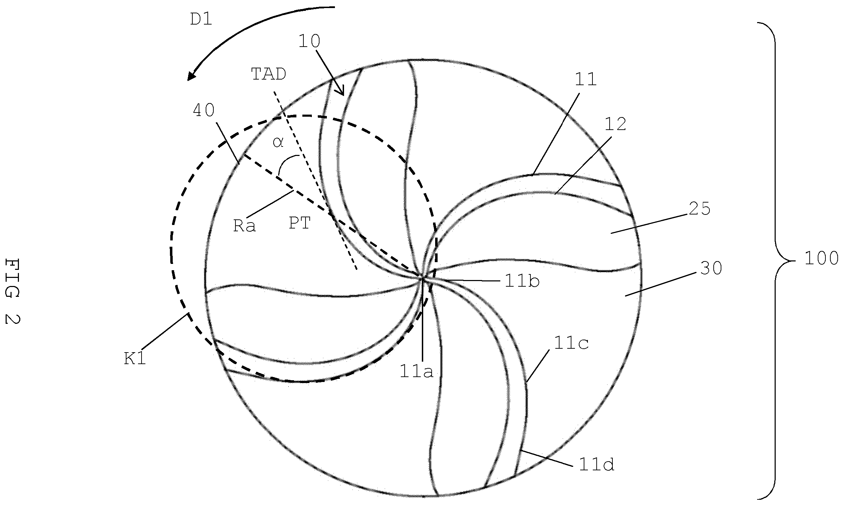

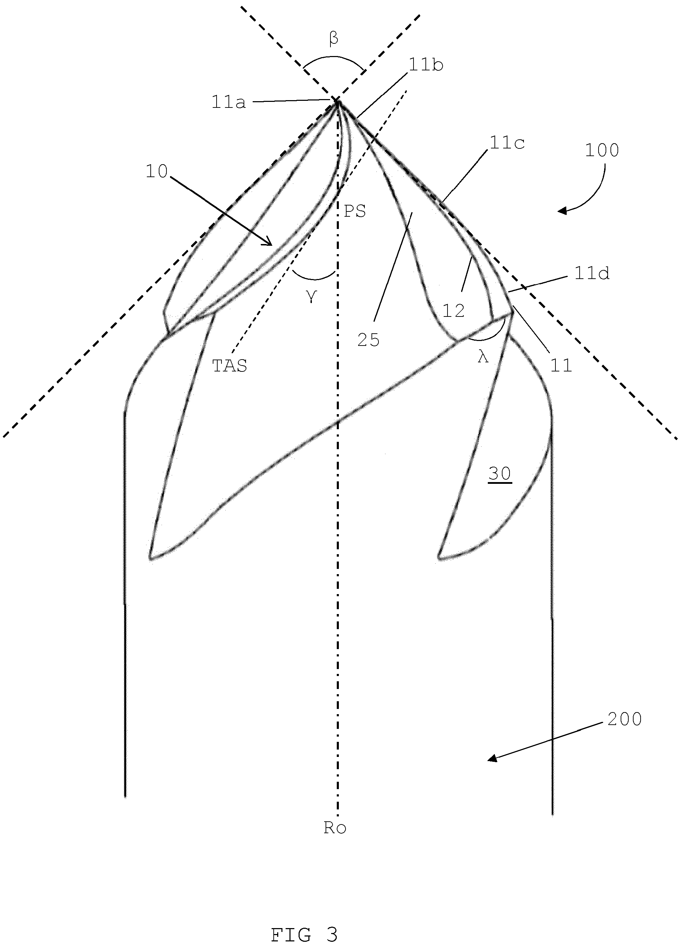

In der in den Figuren 2, 3 und 4 dargestellten Ausführungsform verfügt der Schneidkopf 100 eines erfindungsgemäßen Fasenfräsers 1 über vier spiralförmig gewundene Klingen 10. Sie umfassen jeweils eine gekrümmte Schneide 11, eine gleichsinnig gekrümmte hintere Klingenkante 12, eine dazwischen liegende erste Freifläche 13 und jeweils dieselbe Geometrie, insbesondere bzgl. Krümmungsverlauf und Schneidenhöhe. Bei einer Rotation des Fasenfräsers 1 trägt die Schneide 11 Material vom Werkstück ab. Dadurch bildet sich im Werkstück eine Schneidebene. Die gekrümmte Schneide 11 wird in - der Einfachheit halber nur drei - unterschiedliche Bogenabschnitte unterteilt, nämlich in einen Spitzenabschnitt 11b, in einen mittleren Abschnitt 11c und in einen Auslaufabschnitt 11d. Alle hintere Klingenkanten 12 und - vereinfacht betrachtet - alle Schneiden 11 laufen in einer gemeinsamen Spitze 11a zusammen. Tatsächlich reichen die Schneiden 11 aus fertigungstechnischen Gründen nicht ganz bis an die Schneidkopfspitze 11a heran, um der Schneidkopfspitze 11a eine ausreichende mechanische Stabilität zu verleihen. An die hinteren Klingenkanten 12 schließt sich jeweils eine zweite Freifläche bzw. Klingenrückseite 25 an. Die Klingenrückseite 25 schließt in der Seitenansicht der Fig. 3 mit der ersten Freifläche 13 der Klinge 10 einen stumpfen Winkel λ ein. Dadurch fällt die Klingenrückseite 25 - wie auch die erste Freifläche 13 selbst - gegenüber der von den Schneiden 11 herausgearbeiteten Schneidebene ab.

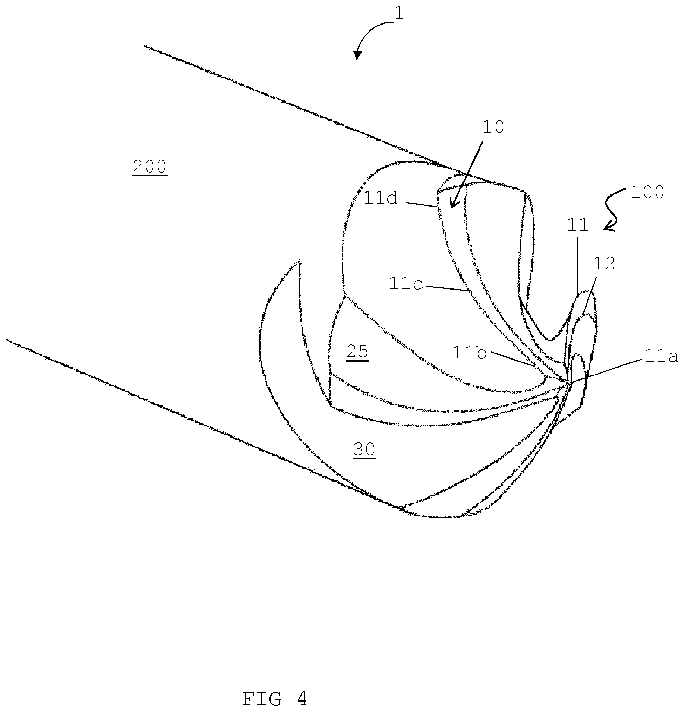

Zwischen jeder Klingenrückseite 25 und der entgegen der Drehrichtung D1 nächstfolgenden Schneide 11 befindet sich jeweils ein Spanraum bzw. ein Spanabfuhrausschnitt 30. Dabei handelt es sich um einen an sich bekannten, in Relation zur Klinge 10 tief in einen zylindrischen Schaft 200 des Fasenfräsers 1 eingeschnittenen Ausschnitt mit einem V-förmigen Querschnitt (Fig. 3, 4). Die bei der Rotation des Fasenfräsers 1 entstehenden Späne gleiten durch den Spanabfuhrabschnitt 30 radial auswärts.

Die Klingen 10 sind gemäß Fig. 2 über den Schneidkopf 100 hinweg winkelgleich verteilt. Erfindungsgemäß verlaufen ihre Schneiden 11 auf ihrem Weg von der Schneidkopfspitze 11a zum Außenrand 40 hin aber nicht mit einer konstanten, sondern in einer veränderlichen Krümmung bzw. mit unterschiedlichen Radien ihrer Bogenabschnitte. Sie beginnen an der Schneidkopfspitze 11a weitgehend geradlinig, also ohne oder mit sehr geringer Krümmung, sodass benachbarte Spitzenabschnitte 11b der vier Schneiden 11 einen Winkel von 90° einschließen. Bereits kurz nach dem Spitzenabschnitt 11b beginnt oder forciert sich die Krümmung der Schneiden 11, die im mittleren Abschnitt 11c zunimmt und im Auslaufabschnitt 11d wieder geringfügig abnimmt Zur Veranschaulichung liegt in der Draufsicht der Fig. 2 ein gestrichelter Kreis K1 an einer Schneide 11 an. Aufgrund der Änderung der Schneidenkrümmung liegt der Spitzenabschnitt 11b der Schneide 11 innerhalb des Kreises K1, während der Auslaufabschnitt 11d der Schneide 11 außerhalb des Kreises K1 liegt.

An einer Schneide 11 liegt eine Radiale Rₐ an. Sie verläuft auf einem Radius des kreisförmigen Querschnitts der Fasenfräsers 1 von der Schneidkopfspitze 11a bis zu einem Außenrand 40 des Schneidkopfes 100. Die Radiale Rₐ schneidet die Schneide 11 der Klinge 10 im Punkt PT. Dort liegt eine Tangente TAD an der Schneide 11 an. Die Radiale Rₐ und die Tangente TAD schließen einen Winkel α ein. Er kann zur Beschreibung Krümmung der Schneide 11 im Punkt PT in der Draufsicht der Fig. 2 herangezogen werden.

Über Winkeldifferenzen α₁ - α₂ paarweise nebeneinander liegender Punkte PT₁, PT₂ mit gleichem Abstand auf der Schneide 11 (nicht dargestellt) kann eine Krümmungsänderung in deren Verlauf zwischen den Punkten PT beschrieben werden. Die veränderliche Krümmung jeder Schneide 10 lässt sich also anstelle unterschiedlicher Radien auch mithilfe unterschiedlicher Winkel α und ihrer Differenzen, die sich im Verlauf der Schneiden 10 ergeben, zumindest näherungsweise angeben.

Gleiches gelingt auch in der Seitenansicht (Fig. 3) des erfindungsgemäßen Fasenfräsers 1: Sie zeigt den zylindrischen Schaft 200 mit einer Rotationsachse Rₒ, auf der auch die Schneidkopfspitze 11a des Schneidkopfs 100 liegt. Der Durchmesser des Schaftes 200 und der Durchmesser des Außenrandes 40 des Schneidkopfes 100 sind identisch. Die Schneidkopfspitze 11a hat einen Spitzenwinkel β. Er stellt den Öffnungswinkel eines geraden Kreiskegels dar, den der Schneidkopf 100 bei seiner Rotation um die Rotationsachse Rₒ ergibt.

Bei Projektion der Rotationsachse Rₒ und der Schneide 10 auf eine Ebene, die parallel zur Seitenansicht liegt, ergibt sich der Punkt PS als Schnittpunkt der beiden Linien. Eine Tangente TAS im Punkt PS an der Schneide 11 schließt mit der Rotationsachse Rₒ den Winkel γ ein. Der Winkel γ kann ebenfalls die Krümmung der Schneide 10 umschreiben, hier in der Seitenansicht.

Die Winkeldifferenzen γ₁, γ₂ paarweise nebeneinanderliegender und gleich beabstandeter Punkte PS₁, PS₂ (nicht dargestellt) auf der Schneide 11 unterscheiden sich ebenfalls. Ihre Veränderung kann ebenfalls ein Maß für die Krümmungsänderung im Verlauf der Schneide 11 zwischen Punktepaaren PS₁, PS₂ darstellen.

In der Draufsicht definiert der Winkel α und in der Seitenansicht der Winkel γ die Krümmung der Schneiden 11 selbst. So liegt der Winkel α im kaum gekrümmten Spitzenabschnitt 11b der Schneide 11 bei ca. 4°bis 8°. Im mittleren Abschnitt der Schneide 11c liegt der Winkel α bei ca. 15° bis 30° und erreicht schließlich im Auslaufabschnitt der Schneide 11d etwa 40° bis 50°.

Durch die erfindungsgemäße Änderung der Krümmung der Schneiden 11 und insbesondere durch ihre konkrete Entwicklung im Schneidenverlauf ist eine Bearbeitung der Schneiden des Fasenfräsers bis in die Schneidkopfspitze 11a hinein erst möglich. Denn durch die bestenfalls geringe Krümmung der Schneide 11 im Spitzenabschnitt 11b kann ein Schleifwerkzeug zur Herstellung der Schneide 11 unter den beengten Platzverhältnissen an der Schneidkopfspitze 11a weitgehend radial gegenüber dem Fasenfräser 1 angestellt werden, so dass bei der Herstellung einer Schneide 11 benachbarte Schneiden 11 nicht beeinträchtigt werden. Mit zunehmendem radialen Abstand von der Schneidkopfspitze 11a kann das Schleifwerkzeug dann gegenüber der Radialen Ra angewinkelt werden, um der Schneide 11 einen an sich bekannten bogenförmigen Verlauf zu geben. Resultat ist eine schneidfähige Spitze des erfindungsgemäßen Fasenfräsers 1, der die Ausbildung einer Fase bis in Ecken hinein erlaubt.

Da es sich bei der vorhergehenden, detailliert beschriebenen Vorrichtung um ein Ausführungsbeispiel handelt, kann sie in üblicher Weise vom Fachmann in einem weiten Umfang modifiziert werden, ohne den Bereich der Erfindung zu verlassen. Insbesondere können auch die konkreten Ausgestaltungen der Schneiden in anderer Form als in der hier beschriebenen erfolgen, beispielsweise mit unterschiedlichen Geometrien der Schneiden desselben Fasenfräsers. Ebenso kann der Krümmungsverlauf in einer anderen Form ausgestaltet werden, wenn dies aus Platzgründen bzw. gestalterischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Fasenfräser
- 10: Klinge
- 11: Schneide
- 11a: Schneidkopfspitze
- 11b: Spitzenabschnitt der Schneide 11
- 11c: Mittlerer Abschnitt der Schneide 11
- 11d: Auslaufabschnitt der Schneide 11
- 12: hintere Klingenkante
- 13: erste Freifläche
- 14: Schneidkopf
- 16-1, 16-2, 16-3: Hauptschneiden
- 16-1a, 16-2a, 16-3a: außenumfangsseitige Schneidenecken
- 16-1b, 16-2b, 16-3b: mittige Schneidenecken
- 17-1, 17-2, 17-3: Hauptfreifläche
- 18-1, 18-2, 18-3: Spannut
- 20: Drehachse
- 25: Klingenrückseite
- 30: Spanabfuhrausschnitt
- 40: Außenrand des Schneidkopfes
- 100: Schneidkopf
- 200: Schaft

- α: Winkel zwischen Radiale Ra und Tangente TAD an die Schneide 11
- β: Öffnungswinkel
- γ: Winkel zwischen Rotationsachse Ro und Tangente TAS an die Schneide 11

- K1: Kreis mit Radius 1
- K2: Kreis mit Radius 2
- D1: Drehrichtung
- D2: Drehrichtung
- R: Bogenradien der Hauptschneiden
- Rₐ: Radiale
- Rₒ: Rotationsachse
- TAD: Tangente in der Draufsicht
- TAS: Tangente in der Seitenansicht
- Ø: maximale Schneiddurchmesser des Schneidkopfs 14

## Patentansprüche

1. Vorrichtung zum Anfasen, Entgraten und Senken, nämlich Fasenfräser, aus einem Schaft (200) und einem Schneidkopf (100), dessen Rotationskörper einen Kegel darstellt, wobei die Kegelspitze mit einer Schneidkopfspitze (11a) des Fasenfräsers zusammenfällt, mit einer Anzahl an Schneiden (11) des Schneidkopfs (100) bis in die Schneidkopfspitze (11a) hinein, und mit einem in axialer Richtung betrachteten bogenförmig gekrümmten Verlauf einer Schneide (11) von der Schneidkopfspitze (11a) aus zu einem Außenrand (40) des Schneidkopfs (100) hin, der mindestens eine Krümmungsänderung aufweist.

2. Vorrichtung nach Anspruch 1, **gekennzeichnet durch** mindestens einen Schneidenabschnitt (11b) im Bereich der Schneidkopfspitze (11a) und mindestens einen Schneidenabschnitt (11d) im Bereich des Außenrandes (40) des Schneidkopfes (100), die eine voneinander verschiedene Krümmung aufweisen.

3. Vorrichtung nach Anspruch 2, **gekennzeichnet durch** genau zwei Schneidenabschnitte, die jeweils eine voneinander verschiedene Krümmung aufweisen.

4. Vorrichtung nach einem der obigen Ansprüche, **gekennzeichnet durch** eine von der Schneidkopfspitze (11a) radial nach außen zunehmenden Krümmung mindestens eines Schneidenabschnittes.

5. Vorrichtung nach einem der obigen Ansprüche, **gekennzeichnet durch** eine stetige, insbesondere konstante Änderung der Krümmung mindestens eines Schneidenabschnittes.

6. Vorrichtung nach einem der obigen Ansprüche, **dadurch gekennzeichnet, dass** eine Tangente (TAD) an der Schneide (11) eine Radiale (Rₐ) in einem Winkel von 0° bis 20°, vorzugsweise von 0° bis 15°, besonders bevorzugt im Winkel von 0° bis 10° schneidet.

7. Vorrichtung nach einem der obigen Ansprüche, **dadurch gekennzeichnet, dass** eine Tangente (TAD) an der Schneide (11) auf Höhe des Außenrandes (40) des Schneidkopfes (100) eine Radiale (Rₐ) auf gleicher Höhe in einem Winkel von 10° bis 60°, vorzugsweise von 20° bis 55°, besonders bevorzugt im Winkel von 40° bis 50° schneidet.

8. Vorrichtung nach einem der obigen Ansprüche, **dadurch gekennzeichnet, dass** nur eine Teilmenge der Schneiden bis zu der Schneidkopfspitze hin verläuft.

9. Vorrichtung nach einem der obigen Ansprüche, mit bis zu zehn Schneiden, vorzugsweise mit zwei bis acht Schneiden, insbesondere mit drei bis fünf Schneiden.

10. Vorrichtung nach einem der obigen Ansprüche und mit einer Mehrzahl an Schneiden, **gekennzeichnet durch** eine unterschiedliche Geometrie der in Rotationsrichtung nebeneinanderliegender Schneiden hinsichtlich ihrer Winkel an der Schneidkopfspitze und/oder hinsichtlich ihrer Winkel an einem umfangsseitigen Schneidenauslauf und/oder hinsichtlich ihrer in Richtung der Rotationsachse betrachteten Schneidenhöhe.

11. Vorrichtung nach einem der obigen Ansprüche, **dadurch gekennzeichnet, dass** ein Öffnungswinkel (β) des Schneidkopfs (100) zwischen 10° und 130° beträgt.

12. Vorrichtung nach einem der obigen Ansprüche, **dadurch gekennzeichnet, dass** sie vollständig aus nur einem einzigen Material, insbesondere aus Hartmetall oder HSS besteht.

13. Vorrichtung nach Anspruch 1 bis 11, **dadurch gekennzeichnet, dass** dessen Schneiden zumindest abschnittsweise aus einem vom Körpermaterial verschiedenen Material bestehen.

14. Vorrichtung nach Anspruch 13, **dadurch gekennzeichnet, dass** dessen Schneiden aus einem gegenüber dem Körpermaterial härteren Material, insbesondere aus Siliziumcarbid oder Wolframcarbid bestehen.

## Claims

1. A device for chamfering, deburring, and countersinking, namely a chamfer milling cutter, consisting of a shaft (200) and a cutting head (100), the rotary body of which forms a cone, wherein the cone tip coincides with a cutting head tip (11a) of the chamfer milling cutter, with a number of cutting edges (11) of the cutting head (100) extending into the cutting head tip (11a), and with a profile of a cutting edge (11) that is curved in an arc-shaped manner, as viewed in the axial direction, from the cutting head tip (11a) to an outer edge (40) of the cutting head (100), which has at least one change in curvature.

2. The device according to claim 1, **characterized by** at least one cutting edge section (11b) in the region of the cutting head tip (11a) and at least one cutting edge section (11d) in the region of the outer edge (40) of the cutting head (100), which have curvatures that differ from each other.

3. The device according to claim 2, **characterized by** exactly two cutting sections, each of which has a different curvature.

4. The device according to any one of the preceding claims, **characterized by** a curvature of at least one cutting section, which curvature increases radially outwards from the cutting head tip (11a).

5. The device according to any one of the preceding claims, **characterized by** a continuous, in particular constant, change in the curvature of at least one cutting section.

6. The device according to any one of the preceding claims, **characterized in that** a tangent (TAD) to the cutting edge (11) intersects a radial (Rₐ) at an angle of 0° to 20°, preferably 0° to 15°, and particularly preferably at an angle of 0° to 10°.

7. The device according to any one of the preceding claims, **characterized in that** a tangent (TAD) to the cutting edge (11) at the level of the outer edge (40) of the cutting head (100) intersects a radial (Rₐ) at the same level at an angle of 10° to 60°, preferably 20° to 55°, particularly preferably at an angle of 40° to 50°.

8. The device according to any one of the preceding claims, **characterized in that** only a partial quantity of the cutting edges extends up to the cutting head tip.

9. The device according to any one of the preceding claims, with up to ten cutting edges, preferably with two to eight cutting edges, in particular with three to five cutting edges.

10. The device according to any one of the preceding claims, and with a plurality of cutting edges, **characterized by** a different geometry of the cutting edges lying next to each other in the direction of rotation with regard to their angles at the cutting head tip, and/or with regard to their angles at a cutting edge run-out at the circumference, and/or with regard to their cutting edge height viewed in the direction of the axis of rotation.

11. The device according to any one of the preceding claims, **characterized in that** an opening angle (β) of the cutting head (100) is between 10° and 130°.

12. The device according to any one of the preceding claims, **characterized in that** it consists entirely of only one single material, in particular of hard metal or HSS.

13. The device according to claim 11, **characterized in that** the cutting edges thereof consist at least in sections of a material different from the body material.

14. The device according to claim 13, **characterized in that** the cutting edges thereof consist of a material that is harder with respect to the body material, in particular of silicon carbide or tungsten carbide.

## Revendications

1. Dispositif pour chanfreiner, ébarber et lamer, à savoir une fraise à chanfreiner, composée d'une tige (200) et d'une tête de coupe (100), dont le corps de rotation représente un cône, sachant que la pointe conique coïncide avec une pointe de tête de coupe (11a) de la fraise à chanfreiner, avec un nombre de tranchants (11) de la tête de coupe (100) jusqu'à l'intérieur de la pointe de tête de coupe (11a), et avec un développement courbé en forme d'arc vu en direction axiale d'un tranchant (11) depuis la pointe de tête de coupe (11a) vers un bord extérieur (40) de la tête de coupe (100), qui comporte au moins une variation de courbure.

2. Dispositif selon la revendication 1, **caractérisé par** au moins une section de coupe (11b) dans la zone de la pointe de tête de coupe (11a) et au moins une section de coupe (11d) dans la zone du bord extérieur (40) de la tête de coupe (100), qui comportent une courbure différente l'une de l'autre.

3. Dispositif selon la revendication 2, **caractérisé par** exactement deux sections de coupe, qui comportent respectivement une courbure différente l'une de l'autre.

4. Dispositif selon l'une quelconque des revendications ci-dessus, **caractérisé par** une courbure d'au moins une section de coupe, augmentant radialement vers l'extérieur depuis la pointe de tête de coupe (11a).

5. Dispositif selon l'une quelconque des revendications ci-dessus, **caractérisé par** une variation continue, en particulier constante de la courbure d'au moins une section de tranchant.

6. Dispositif selon l'une quelconque des revendications ci-dessus, **caractérisé en ce qu'**une tangente (TAD) sur le tranchant (11) coupe une radiale (Rₐ) à un angle de 0° à 20°, de préférence de 0° à 15°, en particulier de préférence à un angle de 0° à 10°.

7. Dispositif selon l'une quelconque des revendications ci-dessus, **caractérisé en ce qu'**une tangente (TAD) sur le tranchant (11) à hauteur du bord extérieur (40) de la tête de coupe (100) coupe une radiale (Rₐ) à la même hauteur à un angle de 10° à 60°, de préférence de 20° à 55°, en particulier de préférence à un angle de 40° à 50°.

8. Dispositif selon l'une quelconque des revendications ci-dessus, **caractérisé en ce que** seulement une quantité partielle des tranchants va jusqu'à la pointe de tête de coupe.

9. Dispositif selon l'une quelconque des revendications ci-dessus, avec jusqu'à dix tranchants, de préférence deux à huit tranchants, en particulier avec trois à cinq tranchants.

10. Dispositif selon l'une quelconque des revendications ci-dessus et avec une pluralité de tranchants, **caractérisé par** une géométrie différente des tranchants juxtaposés en direction de rotation concernant leurs angles sur la point de tête de coupe et/ou concernant leurs angles sur une sortie de coupe périphérique et/ou concernant leur hauteur de coupe vue en direction de l'axe de rotation.

11. Dispositif selon l'une quelconque des revendications ci-dessus, **caractérisé en ce qu'**un angle d'ouverture (β) de la tête de coupe (100) se situe entre 10° et 130°.

12. Dispositif selon l'une quelconque des revendications ci-dessus, **caractérisé en ce qu'**il n'est composé complètement que d'un matériau unique, en particulier de métal dur ou d'acier à coupe très rapide (HSS).

13. Dispositif selon la revendication 1 à 11, **caractérisé en ce que** les tranchants de celui-ci sont copmposés au moins en partie d'un matériau différent du matériau de corps.

14. Dispositif selon la revendication 13, **caractérisé en ce que** les tranchants de celui-ci sont composés d'un matériau plus dur par rapport au matériau de corps, en particulier en carbure de silicium ou carbure de tungstène.
